# EUROPEAN PATENT SPECIFICATION

(11) **EP 3 017 938 B1**
(45) Date of publication and mention of the grant of the patent: **03.01.2018**
(21) Application number: 14191991.0
(22) Date of filing: 06.11.2014
(51) Int. Cl.: B29D 11/00, B29C 69/00

(54) **Process for preparing spectacle lenses**
Verfahren zur Herstellung von Brillengläsern
Procédé de préparation de verres de lunettes

(43) Date of publication of application: 11.05.2016
(73) Proprietor: Carl Zeiss Vision International GmbH, 73430 Aalen (DE)
(72) Inventor: Chen, Fang, Hallett Cove, South Australia 5158 (AU); Wallace, Mark, Morphett Vale, South Australia 5162 (AU)
(74) Representative: Carl Zeiss AG - Patentabteilung

(56) References cited:
- EP-A2- 1 872 929
- WO-A1-2011/010267
- DE-A1- 2 729 385
- US-A- 4 155 962
- US-A- 5 100 590
- US-A- 5 451 617
- US-A1- 2006 001 184

## Description

### Field

The invention relates to spectacle lenses or spectacle lens blanks and more specifically to a process for preparing spectacle lenses or spectacle lens blanks comprising curing a monomer composition in an elongated mould to form a plastic rod, transversely cutting portions of plastic from the plastic rod and finishing the transversely cut portions to form spectacle lenses or spectacle lens blanks.

In preferred embodiments the plastic comprises a urethane resin.

### Background

The casting method commonly used in production of spectacle lenses generally comprises placing a monomer composition between two glass or metal mould surfaces held apart by a flexible gasket. The monomer is cured by polymerisation initiated by UV-light or heat.

During the polymerisation process an exothermic chemical reaction occurs which generally requires cooling of the mould to maintain control of the process. The monomer tends to exotherm from the centre of the bulk monomer, which makes the casting process problematic for thick lenses. Because of poor heat transfer through the lens one of the significant factors causing rejection of lenses is optical strain caused within plastic cast lenses as a result of uneven heat build-up, particularly in casting of thick lenses required for high power.

Also during conversion of the monomer composition to the hardened plastic the material shrinks by about 5 to 14%. This shrinkage occurs primarily while the polymerising monomer composition is still in the liquid state and requires that a flexible gasket is used to separate the front and back faces of the mould.

Once the polymerising monomer composition reaches the gel state the gel hardens to form a rigid plastic. During this stage a problem occurs due to the increasing rigidity where there is a big difference between the thickness of the centre portion of the cast and the edge. In cases where the thickness difference is large as in the case of high-powered lenses the front and back mould sections and/or the lens must bend to prevent separation of the lens and mould causing the lens to be rejected.

Following the casting process lenses are inspected and lenses containing contaminants, air bubbles or distortions such as strain are rejected. Inspection requires that the casting assembly is opened manually by inspectors and the lens inspected using a series of tests for contamination and strain. This process is labour intensive. The reject rates in the factory are also generally proportionate to the square of the lens power. The problems involved in casting thick lenses have led some manufacturers to laminate mould section.

The casting process requires a large number of components and a large number of thicknesses and powers must be prepared and stocked to satisfy the range of customer demands. An error in the pairing of mould sections or gasket often results in rejection of the lens. The lenses need to be cast in thicknesses greater than the finished spectacle requires to grinding and fitting to the wide range of customer requirements. This leads to significant wastage.

There is a need for an alternative casting procedure, which reduces the problems of prior art casting processes.

US 4,155,962 discloses a method of producing an optical lens by casting a liquid monomer in a mould, polymerizing the monomer and removing the optical lens from the mould. The first optical surface of the lens is determined by the surface of the mould whereas the second optical surface, i.e. the surface opposite to the first optical surface of the lens, is cut and polished prior to removing the optical lens from the mould.

WO 2011/010267 A1 discloses a contact lens comprising an extra-ocular indicator adapted to alter in colour upon removal of the contact lens from the eye and different methods for producing such contact lenses. The extra-ocular indicator may be at least partially composed of a thermochromic pigment or a pH sensitive pigment. According to one of the disclosed methods a monomer, cross-linking agent and activator are poured into a tube and after curing a polymer rod/cylinder are formed. The polymer rod is cut into blanks, i.e. contact lens buttons, which may be masked and brought in contact with a solution including an extra-ocular indicator. Alternatively an extra-ocular indicator may be already present in the monomer mixture for forming the polymer rod. According to this methods the blanks finally have to be lathed into a contact lens. WO 2011/010267 A1 does not mention spectacle lenses.

### Summary

There is provided a process for preparing spectacle lenses or spectacle lens blanks comprising curing a reactive monomer composition in an elongated mould to form a plastic rod and transversely cutting portions therefrom for forming the spectacle lenses or the spectacle lens blanks, wherein,
i) the cross-section of the plastic rod is round, the diameter of the cross section is at least 40 mm and no more than 150 mm, or
ii) the shape of the cross section of the plastic rod is irregular, the maximum width is at least 40 mm, the minimum width is at least 30 mm and the maximum cross-section is no more than 150 mm.

In a preferred set of embodiments the plastic rod is of a urethane resin, which may be obtained, for example, from reactive monomer composition comprising an isocyanate, isothiocyanate or mixture thereof and active hydrogen compound such as a compound comprising a plurality of active hydrogen groups selected from the group consisting of hydroxyl (-OH), mercapto (-SH) and combinations thereof. In more preferred embodiments the urethane resin is a polythiourethane obtained, for example from a reactive monomer composition comprising an isocyanate and an active hydrogen compound comprising thiol groups, preferable a tri- and/or tetra-thiol compound.

In a preferred set of embodiments the curing of the reactive monomer composition is polymerised under conditions of temperature and catalyst content to provide a reaction time to gel point sufficiently long to avoid striation. Depending on the efficiency of temperature control and reactive monomer composition the time to reach the gel point of the reactive monomer composition is preferably at least 50 hours, preferably at least 60 hours, more preferably at least 70 hours, still more preferably at least 80 hours, even more preferably at least 90 hours and most preferably at least 100 hours following initiation of polymerisation.

In a further embodiment the monomer composition contains no more than 100 ppm such as from 0 to 100 ppm (preferably 1 to 100 ppm and more preferably 5 to 80 ppm) of a dialkyltin dihalide catalyst based on the weight of the monomer composition. A relatively small amount of catalyst, when used, is preferred in order to control the rate of reaction of the monomer composition and avoid defects.

It is preferred that the inside of the elongated mould is contacted with a release agent for the plastic rod, such as a fatty-alkyl trichlorosilane.

### Definitions

The occurrence of strain or striation is an obstacle to the production of lenses having no defect or aberrations. Once striations form they are almost impossible to eliminate. The terms "strain" and "striation" refer to an optical distortion in the polymer in some parts having different refractive index, which can be observed by visual rib-like aberrations.

The terms "transverse" and "transversely" refer to sections generally across the rod which may be perpendicular to the longitudinal axis or at an angle from the perpendicular of, for example up to 30° such as up to 20° from perpendicular to the axis of the rod. The portions may be cut from the rod with planar or curved faces. Cutting of portions with one or both curved faces may be used to reduce resin wastage and the amount of subsequent processing required to form lenses or lens blanks. Cut portions from the rod are subject to refining to form the spectacle lenses or the spectacle lens blanks. Depending on the length of the rod and portion thickness many cut portions can be obtained from each rod and transformed into spectacle lenses or spectacle lens blanks such as, for example, at least 5 portions such as at least 10 or at least 20 portions cut and refined into spectacle lenses or spectacle lens blanks. The portions may be cut using readily available equipment such as saws or other cutting instruments. The portions may be cut and finished at the same time or rods may be held as stock to allow cutting of portions and refining as required according to customer demand. The thickness of the lens forming portions cut from the rod may depend on the required spectacle lens type and/or optical prescription to be met by the spectacle lens. Typically the thickness of the cut portion will be in the range of from 1 mm to 30 mm such as from 5 mm to 20 mm or 5 mm to 15 mm.

The term "cross-section" refers to a section generally perpendicular to the longitudinal axis of the rod or mould.

The term "gel point" refers to the point at which a gel or insoluble polymer is formed. Gel point is the extent of conversion at which the liquid reactive monomer polymerisation mixture becomes a solid.

The term "reactive monomer composition" refers to a monomer composition, which may comprise individual reactive monomer molecules, or prepolymers, which can be cured and cross-linked or cross-linked to form a rigid spectacle lens. Various embodiments can include lens forming mixtures with one or more additives such as: UV blockers, tints, photoinitiators or catalysts, and other additives one might desire in a spectacle lense.

The terms "urethane" and "urethane resin "include resins of polyurethanes and polythiourethanes which may be formed from a reactive monomer composition comprising at least one of isocyanate and isothiocyanate and monomer comprising a plurality of active hydrogen groups selected from hydroxyl (-OH), mercapto (-OH) and combinations thereof. Generally the active hydrogen monomer will comprise from 2 to 4 of such active hydrogen groups per molecule.

The term "Mould" as used herein, refers to a rigid or semi-rigid object that may be used to form a plastic rod from which spectacle lenses may be fashioned by cutting portions from the rod and using well known methods such as grinding and polishing to produce finished spectacle lenses. The mould may have any of a wide range of cross-section shapes useful in preparing spectacle lenses such as round, oval, elliptic. The cross section may have multiple edges such as square, rectangular, hexagonal and octagonal or the like although it will be appreciated that corners may be rounded to facilitate easy removal from the mould.

The term "plastic rod" refers to an elongated plastic material. Generally the aspect ratio of the rod (the length divided by maximum width of the cross-section) will be at least 2 and preferably at least 3. Rods of significant length may be prepared in accordance with the invention having an aspect ratio of up to 50 such as up to 20 or up to 10. The rod may have any of a wide range of shapes useful in preparing spectacle lenses such as round, oval, ellipse. The cross section may have multiple edges such as square, rectangular, hexagonal, octagonal or the like although it will be appreciated that corners may be rounded to facilitate easy removal from the case.

In cases where the cross-section is round the diameter of the cross section is at least 40 mm such as at least 60 mm or at least 70 mm. The diameter is no more than 150 mm such as no more than 100 mm.

Where the shape of the cross section is irregular such as an oval or ellipse the maximum width will be at least 40 mm and the minimum is at least 30 mm The minimum width at a cross-section of the rod will be at least 30 mm and preferably at least 40 mm. Preferable the rod at maximum width of the rod cross section is preferably at least 40 mm, more preferably at least 50 mm such as at least 60 mm. The maximum cross-section is no more than 150 mm such as no more than 100 mm.

In one set of embodiments the aspect ratio of the rod is at least 3 and when the rod cross-section is round the diameter is at least 40 mm and wherein the rod has an irregular cross-section the minimum width (i.e. width about the centre of the cross section) is at least 30 mm and the maximum width is at least 40 mm. In a preferred set of embodiments the aspect ratio of the rod is at least 3 and when the rod cross-section is round the diameter is at least 50 mm and wherein the rod has an irregular cross-section the minimum width is at least 40 mm and the maximum width is at least 50 mm. In a more preferred set of embodiments the aspect ratio of the rod is at least 3 and when the rod cross-section is round the diameter is at least 60 mm and wherein when the rod has an irregular cross section the minimum width is at least 50 mm and the maximum width is at least 60 mm. The width referred to is the width about the centre of the cross section.

The term refining in respect of the transversely cut portions refers to processing to form lenses to meet customer needs such as prescription requirements or to form blanks, which are subsequently processed to customer requirements. The processes may, for example, involve one or more processes such as grinding, polishing, application of coatings known in the industry such as hard-coatings, antireflective coatings, reflective coatings, UV coatings and photochromic coatings.

### Detailed Description

The process of the invention allows spectacle lenses to be manufactured in large quantities without the use of the glass mould sections and intermediate spacer gasket, which has been the standard method, used for many decades in formation of plastic spectacle lenses.

Despite the difficulties provided by the development of strain in thick castings we have found that the extension of the curing time, specifically the time to reach gel point, allows rod of significant widths to be prepared without strain.

The process involves curing a reactive monomer composition in an elongated mould to form a plastic rod. The elongated mould will preferable be oriented with the long axis upward to allow convenient loading of the monomer composition. The mould may comprise a sidewall extending upward from a closed base, which may be sealed against the lower end of the sidewall. In one set of embodiments the base can be removably sealed against the lower end of the sidewall to facilitate removal of the plastic rod following curing and optionally coating of the mould prior to casting to facilitate release of the plastic rod from the mould. Orienting the mould in the upright position during casting and curing has the significant benefit that imperfections from and particulate material and/gas present in the resin tends to be confined to the vertical extremities of the rod; particulates such as dust settling to the bottom of the mould and gas migrating to the top. As a result optical faults which would normally lead to rejection of lenses or lens blanks are significantly reduced when compared with conventional casting.

The reactive monomer composition may be selected from a range of reactive monomer compositions known to be useful in preparing spectacle lenses. Generally speaking reactive monomer compositions, which polymerise by step growth polymerisation are preferred. Urethane resins including polyurethanes and polythiourethanes, are preferred. In particular the preferred reactive monomer composition provides a urethane plastic rod and comprises an isocyanate and/or isothiocyanate and active hydrogen compound.

We have found that polymers which undergo step growth polymerisation, particularly urethane resins may be more effectively controlled in the process. Effective control of the rate of polymerisation is important because in the relatively large volumes of resin required for rod formation compared with individual lens casting strain can rapidly develop. Control of the rate of polymerisation of urethane resins can be affected through one or more strategies such as temperature control, catalyst choice and amount and monomer selection. In contrast acrylate lenses, although able to be formed without striation in relatively thin section or small volumes provide higher levels of striation and are, generally speaking, less suited to formation of spectacle lenses using the rod casting process.

The polyurethane reactive monomer composition may comprise active hydrogen containing compounds selected prom the wide range of polyols and polythiols known in the art. The proportion of sulphur present may be selected according to the refractive index required. Examples of the bifunctional or higher-functional polyol compounds include polyols such as ethylene glycol, diethylene glycol, propylene glycol, dipropylene glycol, butylene glycol, neopentyl glycol, glycerin, trimethylolethane, trimethylolpropane, butanetriol, 1,2-methyl glucoside, pentaerythritol, dipentaerythritol, tripentaerythritol, sorbitol, erythritol, slaytol, ribitol, arabinitol, xylitol, allitol, manitol, dulcitol, iditol, glycol, inositol, hexanetriol, triglycerol, diglycerol, triethylene glycol, polyethylene glycol, tris(2-hydroxyethyl)isocyanurate, cyclobutanediol, cyclopentanediol, cyclohexanediol, cycloheptanediol, cyclooctanediol, cyclohexanedimethanol, hydroxypropylcyclohexanol, tricyclo[5.2.1.02.6]decanedimethanol, bicyclo[4.3.0]nonanediol, dicyclohexanediol, tricyclo[5.3.1.1]dodecanediol, bicyclo[4.3.0]nonanedimethanol, tricyclo[5.3.1.1]dodecanediethanol, hydroxypropyltricyclo[5.3.1.1]dodecanol, spiro[3.4]octanediol, butylcyclohexanediol, 1,1-bicyclohexylidenediol, cyclohexanetriol, multitol, lactitol, dihydroxynaphthalene, trihydroxynaphthalene, tetrahydroxynaphthalene, dihydroxybenzene, benzenetriol, biphenyltetraol, pyrogallol, (hydroxynaphthyl)pyrogallol, trihydroxyphenanthrene, bisphenol A, bisphenol F, xylylene glycol, di(2-hydroxyethoxy)benzene, bisphenol A bis-2-hydroxyethyl) ether, tetrabromobisphenol A, tetrabromobisphenol A bis(2-hydroxyethyl) ether, dibromoneopentyl glycol and epoxy resin; condensation reaction products of the above-mentioned polyols and organic polybasic acids such as oxalic acid, glutamic acid, adipic acid, acetic acid, propionic acid, cyclohexanecarboxylic acid, .beta.-oxocyclohexanepropionic acid, dimeric acid, phthalic acid, isophthalic acid, salicylic acid, 3-bromopropionic acid, 2-bromoglycollic acid, dicarboxycyclohexane, pyromellitic acid, butanetetracarboxylic acid and phthalic acid; addition reaction products of the above-mentioned polyols and alkylene oxides such as ethylene oxide and propylene oxide; and addition reaction products of alkylene polyamines and alkylene oxides such as ethylene oxide and propylene oxide.

Examples of the bifunctional or higher-functional polyols having a sulfur atom include bis[4-(2-hydroxyethoxy)phenyl]sulfide, bis[4-(2-hydroxypropoxy)phenyl] sulfide, bis[4-(2,3-dihydroxypropoxy)phenyl] sulfide, bis(4-hydroxycyclohexyl) sulfide, bis[2-methyl-4-(hydroxyethoxy)-6-butylphenyl] sulfide, compounds obtained by adding ethylene oxide and/or propylene oxide to the above-mentioned compounds usually in a ratio of three molecules of the former oxide to one hydroxyl group of each latter compound, di-(2-hydroxyethyl) sulfide, 1,2-bis(2-hydroxyethylmercapto)ethane, bis(2-hydroxyethyl) disulfide, 1,4-dithian-2,5-diol, bis(2,3-dihydroxypropyl) sulfide, tetrakis(4-hydroxy-2-thiabutyl)methane, bis(4-hydroxyphenyl)sulfone (trade name Bisphenol S), tetrabromobisphenol S, tetramethylbisphenol S, 4,4'-thiobis(6-tertbutylphenol) and 1,3-bis(2-hydroxyethylthioethyl)cyclohexane.

Specific examples of a polythiol compound include: aliphatic polythiol compounds, such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, bis(2-mercaptoethyl) thiomalate, 2,3-dimercapto-1-propanol (2-mercaptoacetate), 2,3-dimercapto-1-propanol (3-mercaptopropionate), diethyleneglycol bis(2-mercaptoacetate), diethyleneglycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethyleneglycol bis(2-mercaptoacetate), ethyleneglycol bis(3-mercaptopropionate), trimethylolpropane bis(2-mercaptoacetate), trimethylolpropane bis(3-mercaptopropionate), pentaerythritol tetrakis(2-mercaptoacetate), pentaerythritol tetrakis(3-mercaptopropionate) and tetrakis(mercaptomethyl)-methane;
aromatic polythiol compounds, such as 1,2-dimercaptobenzene, 1,3-dimercaptobenzene, 1,4-dimercaptobenzene, 1,2-bis(mercaptomethyl)-benzene, 1,3-bis(mercaptomethyl)benzene, 1,4-bis(mercaptomethyl)benzene, 1,2-bis (mercaptoethyl)benzene, 1,3-bis(mercaptoethyl)benzene, 1,4-bis-(mercaptoethyl)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris (mercaptoethyl)benzene, 1,3,5-tris(mercaptoethyl)benzene, 2,5-toluenedithiol, 3,4-toluenedithiol, 1,3-di(p-methoxyphenyl)propane-2,2-dithiol, 1,3-diphenylpropane-2,2-dithiol, phenylmethane-1,1-dithiol and 2,4-di(p-mercaptophenyl)pentane;
aromatic polythiol compounds containing a sulfur atom in addition to a mercapto group, such as 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene and 1,3,5-tris(mercaptoethylthio)-benzene, as well as nuclear alkylated derivatives thereof;
aliphatic polythiol compounds containing a sulfur atom in addition to a mercapto group, such as bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio)methane, bis(2-mercaptoethylthio)methane, bis(3-mercapto propylthio)methane, 1,2-bis(mercaptomethylthio)ethane, 1,2-bis(2-mercaptoethylthio)ethane, 1,2-bis(3-mercaptopropyl)ethane, 1,3-bis(mercaptomethylthio)propane, 1,3-bis(2-mercaptoethylthio)propane, 1,3-bis(3-mercaptopropylthio)propane, 1,2,3-tris(mercaptomethylthio)propane, 1,2,3-tris(2-mercaptoethylthio)propane, 1,2,3-tris(3-mercaptopropylthio)propane, 1,2-bis[(2-mercaptoethyl)thio]-3-mercaptopropane, 4,8-dimercaptomethyl-1,11-dimercapto-3,6,9-trithiaundecane, 4,7-dimercaptomethyl-1, 11-dimercapto-3,6,9-trithiaundecane, 5,7-dimercaptomethyl 1,11-dimercapto-3,6,9-trithiaundecane, bis(mercaptomethyl)-3,6,9-trithia-1,11-undecaned ithiol, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, bis(1,3-dimercaptopropyl) sulfide, 2,5-dimercapto-1,4-dithiane, 2,5-dimercaptomethyl-1,4-dithiane, 2,5-dimercapto methyl-2,5-dimethyl-1,4-dithiane, bis(mercaptomethyl) disulfide, bis(mercaptoethyl) disulfide and bis(mercaptopropyl) disulfide, as well as thioglycolates and mercaptopropionates ester thereof;
other aliphatic polythiol compounds containing an ester bond and a sulfur atom in addition to a mercapto group, such as hydroxymethylsulfide bis(2-mercaptoacetate), hydroxymethylsulfide bis(3-mercaptopropionate), hydroxyethylsulfide bis(2-mercaptoacetate), hydroxyethylsulfide bis(3-mercaptopropionate), hydroxypropylsulfide bis(2-mercaptoacetate), hydroxypropylsulfide bis(3-mercaptopropionate), hydroxymethyldisulfide bis(2-mercaptoacetate), hydroxymethyldisulfide bis(3-mercaptopropionate), hydroxyethyldisulfide bis(2-mercaptoacetate), hydroxyethyldisulfide bis(3-mercaptopropionate), hydroxypropyldisulfide bis(2-mercaptoacetate), hydroxypropyldisulfide bis(3-mercaptopropionate), 2-mercaptoethylether bis(2-mercaptoacetate), 2-mercaptoethylether bis(3-mercaptopropionate), 1,4-dithiane-2,5-diol bis(2-mercaptoacetate), 1,4-dithiane-2,5-diol bis(3-mercaptopropionate), bis(2-mercaptoethyl)thiodiglycolate, bis(2-mercaptoethyl)thiodipropionate, bis(2-mercaptoethyl)-4,4-thiodibutyrate, bis(2-mercaptoethyl)dithiodiglycolate, bis(2-mercaptoethyl)dithiodipropionate, bis(2-mercaptoethyl)-4,4-dithiodibutyrate, bis(2,3-dimercaptopropyl)thiodiglycolate, bis(2,3-dimercaptopropyl)thiodipropionate, bis(2,3-dimercaptopropyl)dithiodiglycolate, and bis(2,3-dimercaptopropyl)dithiodipropionate;
heterocyclic compounds containing a sulfur atom in addition to a mercapto group, such as 3,4-thiophenedithiol, and 2,5-dimercapto-1,3,4-thiadiazole;
compounds containing a hydroxy group in addition to a mercapto group, such as 2-mercaptoethanol, 3-mercapto-1,2-propanediol, glycerin di(mercaptoacetate), 1-hydroxy-4-mercaptocyclohexane, 2,4-dimercaptophenol, 2-mercaptohydroquinone, 4-mercaptophenol, 3,4-dimercapto-2-propanol, 1,3-dimercapto-2-propanol, 2,3-dimercapto-1-propanol, 1,2-dimercapto-1,3-butanediol, pentaerythritol tris(3-mercaptopropionate), pentaerythritol mono(3-mercaptopriopionate), pentaerythritol bis(3-mercaptopropionate), pentaerythritol tris(thioglycolate), dipentaerythritol pentakis(3-mercaptopropionate), hydroxymethyltris(mercaptoethylthiomethyl)methane and 1-hydroxyethylthio-3-mercaptoethylthiobenzene;
compounds having a dithioacetal or dithioketal skeleton, such as 1,1,3,3-tetrakis(mercaptomethylthio)propane, 1,1,2,2-tetrakis(mercaptomethylthio) ethane, 4,6-bis(mercaptomethylthio)-1,3-dithiacyclohexane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 2-(4,5-dimercapto-2-thiapentyl)-1,3-dithiacyclopentane, 2,2-bis(mercaptomethyl)-1,3-dithiacyclopentane, 2,5-bis(4,4-bis(mercaptomethylthio)-2-thiabutyl)-1,4-dithiane, 2,2-bis(mercaptomethylthio)-1,3-propanedithiol, 3-mercaptomethylthio-1,7-dimercapto-2,6-dithiaheptane, 3,6-bis(mercaptomethylthio)-1,9-dimercapto-2,5,8-trithianonane, 4,6-bis(mercaptomethylthio)-1,9-dimercapto-2,5,8-trithianonane, 3-mercaptomethylthio-1,6-dimercapto-2,5-dithiahexane, 2-(2,2-bis(mercaptodimethylthio)ethyl)-1,3-dithiethane, 1,1,9,9-tetrakis(mercaptomethylthio)-5-(3,3-bis(mercaptomethylthio)-1-thiapropyl)-3,7-dithianonane, tris(2,2-bis(mercaptomethylthio)-ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-{bis(mercaptomethylthio)methyl}-3,4,12,13-tetrakis(mercaptomethylthio)-1,15-dimercapto-2,5,7,9,11,14-hexathiapentadecane, 4,6-bis{3,5-bis(mercaptomethylthio)-7-mercapto-2,6-dithiaheptylthio}-1,3-dithiane, 4-{3,5-bis-(mercaptomethylthio)-7-mercapto-2,6-dithiaheptylthio}-6-mercaptomethylthio-1,3-dithiane, 1,1-bis{4-(6-mercaptomethylthio)-1,3-dithianylthio}-3,3-bis(mercaptomethylthio)propane, 1,3-bis{4-(6-mercaptomethylthio)-1,3-dithianylthio}-1,3-bis(mercaptomethylthio)propane, 1-{4-(6-mercaptomethylthio)-1,3-dithianylthio}-3-{2,2-bis(mercaptomethylthio)ethyl}-7,9-bis(mercaptomethylthio)-2,4,6,10-tetrathiaundecane, 1-{4-(6-mercaptomethylthio)-1,3-dithianylthio}-3-{2-(1,3-dithietanyl)}methyl-7,9-bis(mercaptomethylthio)-2,4,6,10-tetrathiaundecane, 1,5-bis{4-(6-mercaptomethylthio)-1,3-dithianylthio}-3-{2-(1,3-dithietanyl)}methyl-2,4-dithiapentane, 4,6-bis[3-{2-(1,3-dithietanyl)}-methyl-5-mercapto-2,4-dithiapentylthio]-1,3-dithiane, 4,6-bis{4-(6-mercaptomethylthio)-1,3-dithianylthio}-1,3-dithiane, 4-{4-(6-mercaptomethylthio)-1,3-dithianylthio}-6-{4-(6-mercaptomethylthio)-1,3-dithianylthio}-1,3-dithiane, 3-{2-(1,3-dithietanyl)}methyl-7,9-bis(mercaptomethylthio)-1,11-dimercapto-2,4,6,10-tetrathiaundecane, 9-{2-(1,3-dithietanyl)}methyl-3,5,13,15-tetrakis-(mercaptomethylthio)-1,17-dimercapto-2,6,8,10,12,16-hexathiaheptadecane, 3-{2-(1,3-dithietanyl)}methyl-7,9,13,15-tetrakis(mercaptomethylthio)-1,17-dimercapto-2,4,6,10,12,16-hexathiaheptadecane, 3,7-bis{2-(1,3-dithietanyl)}-methyl-1,9-dimercapto2,4,6,8-tetrathianonane, 4-{3,4,8,9-tetrakis(mercaptomethylthio)-11-mercapto-2,5,7,10-tetrathiaundecyl}-5-mercaptomethylthio-1,3-dithiolane, 4,5-bis{3,4-bis(mercaptomethylthio)-6-mercapto-2,5-dithiahexylthio}-1,3-dithiolane, 4-{3,4-bis(mercaptomethylthio)-6-mercapto-2,5-dithiahexylthio}-5-mercaptomethylthio-1,3-dithiolane, 4-{3-bis(mercaptomethylthio)methyl-5,6-bis(mercaptomethylthio)-8-mercapto-2,4,7-trithiaoctyl}-5-mercaptomethylthio-1,3-dithiolane, 2-[bis{3,4-bis-mercaptomethylthio-6-mercapto-2,5-dithiahexylthio}methyl]-1,3-dithiethane, 2-{3,4-bis(mercaptomethylthio)-6-mercapto-2,5-dithiahexylthio}mercaptomethylthiomethyl-1,3-dithiethane, 2-{3,4,8,9-tetrakis(mercaptomethylthio)-11-mercapto-2,5,7,10-tetrathiaundecylthio}mercaptomethylthiomethyl-1,3-dithiethane, 2-{3-bis(mercaptomethylthio)methyl-5,6-bis(mercaptomethylthio)-8-mercapto-2,4,7-trithiaoctyl}mercaptomethylthiomethyl-1,3-dithiethane, 4,5-bis[1-{2-(1,3-dithietanyl)}-3-mercapto-2-thiapropylthio]-1,3-dithiolane, 4-[1-{2-(1,3-dithietanyl)}-3-mercapto-2-thiapropylthio]-5-{1,2-bis(mercaptomethylthio)-4-mercapto-3-thiabutylthio}-1,3-dithiolane, 2-[bis{4-(5-mercaptomethylthio-1,3-dithiolanyl)thio}]methyl-1,3-dithiethane, and 4-{4-(5-mercaptomethylthio-1,3-dithiolanyl)thio}-5-[1-{2-(1,3-dithietanyl)}-3-mercapto-2-thiapropylthio]-1,3-dithiolane, as well as oligomers thereof;
compounds having a skeleton of an orthotrithioformate ester, such as tris(mercaptomethylthio)methane, tris(mercaptoethylthio)methane, 1,1,5,5-tetrakis(mercaptomethylthio)-2,4-dithiapentane, bis(4,4-bis(mercaptomethylthio)-1,3-dithiabutyl)(mercaptomethylthio)methane, tris(4,4-bis-(mercaptomethylthio)-1,3-dithiabutyl)methane, 2,4,6-tris(mercaptomethylthio)-1,3,5-trithiacyclohexane, 2,4-bis(mercaptomethylthio)-1,3,5-trithiacyclo-hexane, 1,1,3,3-tetrakis(mercaptomethylthio)-2-thiapropane, bis(mercaptomethyl)methylthio-1,3,5-trithiacyclohexane, tris((4-mercaptomethyl-2,5-dithiacyclohexyl-1-yl)methylthio)methane, 2,4-bis(mercaptomethylthio)-1,3-dithiacyclopentane, 2-mercaptoethylthio-4-mercaptomethyl-1,3-dithiacyclopentane, 2-(2,3-dimercaptopropylthio)-1,3-dithiacyclopentane, 4-mercaptomethyl-2-(2,3-dimercaptopropylthio)-1,3-dithiacyclopentane, 4-mercaptomethyl-2-(1,3-dimercapto-2-propylthio)-1,3-dithiacyclopentane, tris(2,2-bis(mercaptomethylthio)-1-thiaethyl)methane, tris(3,3-bis(mercaptomethylthio)-2-thiapropyl)methane, tris(4,4-bis(mercaptomethylthio)-3-thiabutyl)methane, 2,4,6-tris(3,3-bis(mercaptomethylthio)-2-thiapropyl)-1,3,5-trithiacyclohexane, and tetrakis(3,3-bis(mercaptomethylthio)-2-thiapropyl]-methane, as well as oligomers thereof; and
compounds having an orthotetrathiocarbonic ester skeleton, such as 3,3'-di(mercaptomethylthio)-1,5-dimercapto-2,4-dithiapentane, 2,2'-di(mercaptomethylthio)-1,3-dithiacyclopentane, 2,7-di(mercaptomethyl)-1,4,5,9-tetrathiaspiro[4,4]nonane, and 3,9-dimercapto-1,5,7,11-tetrathiaspiro[5,5]-undecane, as well as oligomers thereof.

The reactive monomer composition may comprise two or more compounds from one or more of the above sets of active hydrogen compounds.

Particularly preferred polythiol compounds are selected from the group consisting of 1,2-bis(2'-mercaptoethylthio)-3mercaptopropane [GST], pentaerythritol-tetrakis(3-mercaptopropionate) [PTMP], pentaerythritol tetrakis(mercaptoacetate) [PTMA], , trimethylolpropane-tris(3-mercaptopropionate) [TTMP], 2,5-bis9mercaptomethyl)1,4-dithiane [DMMD] pentaerythritol tetrakis(thioglycolate) [PETG].

The isocyanate component used in the process of preparing the preferred polyurethane plastic rod may be chosen from the wide range of diisocyanates known in the art for preparation of polyurethane lenses. These may include, for example, one or more selected from the group consisting of aromatic isocyanates, aliphatic isocyanates and alicyclic isocyanates

Examples of the polyisocyanate compound having an aromatic ring include 1,4-phenylene diisocyanate, methyl-1,3-phenylene diisocyanate, 1,3-bis(isocyanatomethyl)benzene, mesitylene triisocyanate, 1,3-bis(2-isocyanatopropyl)benzene, 4,4'-diphenylmethane diisocyanate, 2,4'-diphenylmethane diisocyanate, 1,5-diisocyanatonaphthalene and (3,3'-dimethyl-4,4'-biphenylylene) diisocyanate.

Examples of the aliphatic polyisocyanate compounds include hexamethylene diisocyanate, lysine ester triisocyanate and hexamethylene triisocyanate, and examples of the polyisocyanate compound having an alicyclic structure include isophorone diisocyanate, bis(isocyanatomethyl)cyclohexane, dicyclohexylmethane diisocyanate, cyclohexane diisocyanate, bis(isocyanatomethyl)bicycloheptane, tris(isocyanatomethyl)cyclohexane and bis(isocyanatomethyl)-1,4-dithiane.

Examples of alicyclic isocyanate compound include bis-isocyanatomethyl-nobornanes (such as 2,5-bis(isocyanatomethyl)-bicyclo[2.2.1]heptane and 2,6-bis(isocyanatomethyl)bicyclo-[2.2.1]heptane), 3,8-bis(isocyanatomethyl)tricyclo-[5.2.1.0^{2.6}]-decane, 3,9-bis(isocyanatomethyl)tricyclo-[5.2.1.0^{2.6}]-decane,4,8-bis(isocyanatomethyl)tricyclo-[5.2.1.0^{2.6}]-decane and 4,9-bis(isocyanatomethyl)tricyclo-[5.2.1.^{02.6}]-decane.

The more preferred isocyanates for use in preparing polyurethane plastic rods are xylenediisocyanate, di(isocyanatomethyl)norbornane and dicyclohexylmethane diisocyanate.

The ratio of isocyanate compounds to active hydrogen compounds may be selected using known chemistries. In one embodiment the ratio of the compounds provides a molar ratio of NCO/(OH + SH) in the range of from 0.5 to 3.0 preferably 0.5 to 1.5.

We have found that the formation of aberrations such as strain are effectively controlled, in particular in urethane spectacle lenses if the rate of polymerisation measured in terms of the time to reach gel point is extended beyond that used in the conventional lens moulding process. In a preferred embodiment of the invention the time for the reactive monomer composition to reach gel point from initiation of polymerisation is at least 50 hours, preferably at least 60 hours, more preferably at least 70 hours, still more preferably at least 90 hours and most preferably at least 100 hours. The conditions under which polymerisation is conducted including the temperature and the formulation of the reactive monomer composition will have an influence on the reaction time to reach the gel point. The reactive monomer composition may comprise a catalyst although in some embodiments it may be preferred to use no catalyst. The catalyst type and amount of catalyst will influence the rate of reaction and may therefore be chosen together with reaction conditions to provide the desired gelation time to avoid strain. Examples of catalysts which may be used in reactive monomer compositions for preparing polyurethane plastic rods, include amines and dialkyltin dihalides such as di-(C₁ to C₆ alkyl)tin dichlorides including for example dimethyltin dichloride and dibutyltin dichloride. Dibutyltin dichloride is the preferred catalyst when a catalyst is used. Dialkyl tin dichloride catalysts is preferably present in amounts of no more than 100 ppm and more preferably no more than 80 ppm to provide control of the reaction rate. When present the dialkyltin dichloride may be used in amounts of, for example, in the range of from 1 ppm to 100 ppm of the reactive monomer composition, preferably 1 ppm to 80 ppm of the reactive monomer compositions. When used the catalyst may be present in an amount of at least 5 ppm (preferably at least 10 ppm) of the reactive monomer composition, that is, when present the catalyst is preferably in an amount in the range of from 5 ppm to 100 ppm, more preferably 10 ppm to 100 ppm and still more preferably where 80 ppm is the upper limit of the catalyst content.

In a particularly preferred set of embodiments the reactive polymer composition comprises:
a polythiol monomer, preferably selected from the polythiols referred to above and may more preferably be selected from the group consisting of 1,2-bis(2'-mercaptoethylthio)-3mercaptopropane [GST], pentaerythritol-tetrakis(3-mercaptopropionate) [PTMP], pentaerythritol tetrakis(mercaptoacetate) [PTMA], trimethylolpropane-tris(3-mercaptopropionate) [TTMP], 2,5-bis(mercaptomethyl)1,4-dithiane [DMMD] pentaerythritol tetrakis(thioglycolate) [PETG];
an isocyanate, preferably selected from the group consisting of xylenediisocyanate, di(isocyanatomethyl)norbornane and dicyclohexylmethane diisocyanate; wherein the molar ratio of NCO/(OH + SH) is in the range of from 0.5 to 3.0 preferably 0.5 to 1.5; and dialkyltin dichloride catalyst in an amount from 0 to 100 ppm (preferably 1 ppm to 100 ppm such as 5 ppm to 100 ppm, more preferably 1 ppm to 80 ppm such as 5 ppm to 80 ppm) based on the reactive polymer composition. Preferably the ratio of NCO/SH is in the range from 0.5 to 3.0, more preferably 0.5 to 1.5.

The temperature at which the reaction proceeds will influence the time to reach gel point. In general the temperature will be no more than 50°C, preferably no more than 40°C prior to reaching gel point. Generally the temperature will be in the range of from -20°C to 50°C, preferably 0°C to 45°C however the temperature for providing the preferred time to gel point may be determined by routine experiment with the monomer composition and type and amount of catalyst (if any) used. Generally speaking, the reaction between polyols and isocyanates is more vigorous and exothermic than the corresponding reaction between polythiols and isocyanates. Accordingly, where the monomer composition comprises hydroxyl groups it may be preferred to control the rate of reaction by more careful temperature control. For example, in some embodiments where the active hydrogen group comprise hydroxyl (-OH) the temperature may be controlled to no more than 20°C, such as no more than 15°C, or no more than 10°C. Suitable reaction conditions may be determined by the skilled worker without undue experimentation having regard to the preferred time to gelation for obtaing acceptable levels or strain or no strain.

On reaching the gel point of the polymerising polymerisable monomer composition the temperature may, and preferably will be increased. In one set of embodiments the temperature is increased to a temperature in the range of from 80°C to 160°C, preferably 120°C to 140°C. The increase in temperature is preferably gradual, for example over a period of at least 5 hours and more preferably at least 10 hours.

The temperature in the range of 80°C to 160°C, preferably 120°C to 140°C is preferably maintained for a period of at least 30 minutes and more preferably at least 60 minutes.

The mould used in casting the plastic rod may be formed of a range of suitable materials having regard to the conditions and reagents used. The mould may generally be formed of a metal such as stainless steel, a glass tube or a plastics material such as PVC. When the mould is formed of a metal or glass it may be preferred to coat the inside of the mould is contacted with a non-stick agent to assist in the ease with which the plastic rod may be removed from the mould following curing. In one embodiment the mould is a plastic mould and following casting the mould is transversely cut with the rod located therein. The section of mould cut with portions of rod may be more easily removed or may be used to protect the lenses following the cutting step of the process.

The non-stick agent should not deleteriously affect the quality of the lenses which are produced from the plastic rod. Some agents such as general lubricants may introduce unacceptable striation or cloudiness. We have found that silanes and in particular alkyltrihalosilanes (where halo is preferably chloro or fluoro) such as fatty-alkyltrichlorosilanes and fatty-alkyltrifluorosilanes may be used to modify the internal surfaces of the mould (particularly a metal or glass mould) to facilitate removal of the cast plastic rod from the mould. The silane non-stick agents are particularly preferred as they bond to the inner surfaces of the mould and excess unbound non-stick agent can be removed by rinsing the mould with a volatile solvent such as acetone to provide rapid drying and preparation of the mould for the casting process. The preferred fatty-alkyltrihalosilanes are C₁₂ to C₂₂ alkyl trichlorosilanes such as octadecyl trichlorosilane. The mould releasing affect may be achieved by contacting the internal surface of the mould with the silane in a dilute solution (about 1 %) in a suitable solvent such as a petroleum distillate. The internal surfaces may subsequently be washed with a solvent, particularly volatile polar solvents such as acetone to remove residual silane. In the case of a mould formed of plastics material the mould may optionally be coated or alternatively the mould and rod may together be transversely cut to provide the lens portions and the resulting mould segments removed from portions of the rod which are refined into lenses or lens blanks.

### Brief Description of the Drawings

Embodiments of the invention will be described with respect to the attached drawings. In the Drawings:

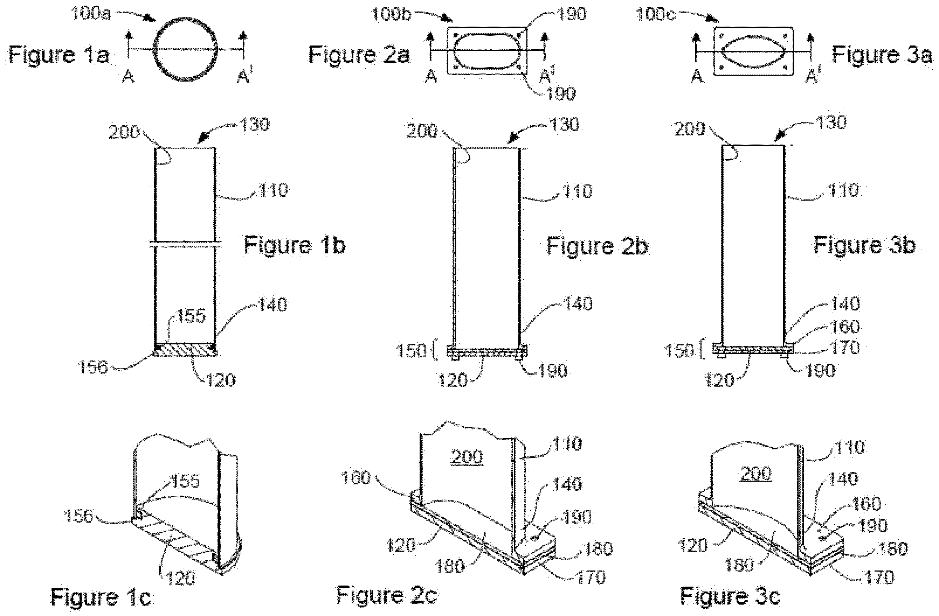

Figures 1(a), (b) and (c) show a mould for casting a cylindrical rod (i.e. or round cross section. Figure 1(a) is a view from above with the mould oriented in the upright position; Figure 1(b) shows a longitudinal section of the mould taken through the line A-A' of Figure 1(a) and Figure 1(c) is a perspective view showing the inside of the base portion of longitudinal section through the line A-A' of Figure 1(a).
Figure 2(a), (b) and (c) show a mould for casting a rod of oval cross-section. Figure 2(a) is a view from above with the mould oriented in the upright position; Figure 2(b) shows a longitudinal section of the mould taken through the line A-A' of Figure 2(a) and Figure 2(c) is a perspective view showing the inside of the base portion of longitudinal section through the line A-A' of Figure 2(a).
Figure 3(a), (b) and (c) show a mould for casting a rod of elliptical cross-section. Figure 3(a) is a view from above with the mould oriented in the upright position; Figure 3(b) shows a longitudinal section of the mould taken through the line A-A' of Figure 3(a) and Figure 3(c) is a perspective view showing the inside of the base portion of longitudinal section through the line A-A' of Figure 3(a).

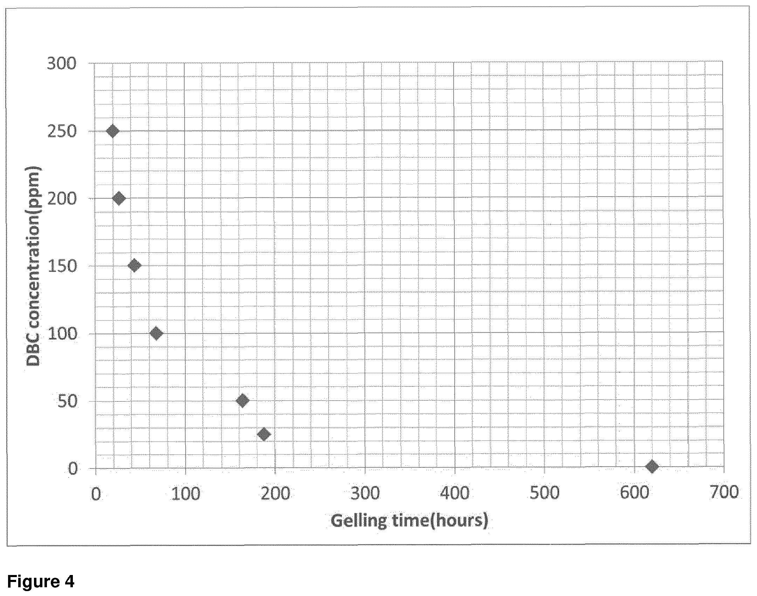

Figure 4 is a graph referred to In Example 4 showing the variation of gelling time (i.e. the time from commencement of polymerisation to reaching gel point) with concentration of dibutyltin dichloride thermal polymerisation catalyst for general composition of Example 1 maintained at 40°C.

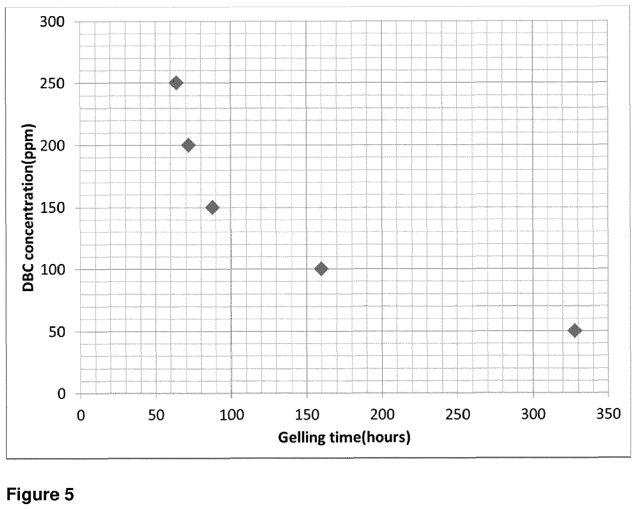

Figure 5 is a graph referred to in Example 5 showing the variation of gelling time (i.e. the time from commencement of polymerisation to reaching gel point) with concentration of dibutyltin dichloride thermal polymerisation catalyst for the composition of Example 1 when cured to gelling at a temperature of 30°C.

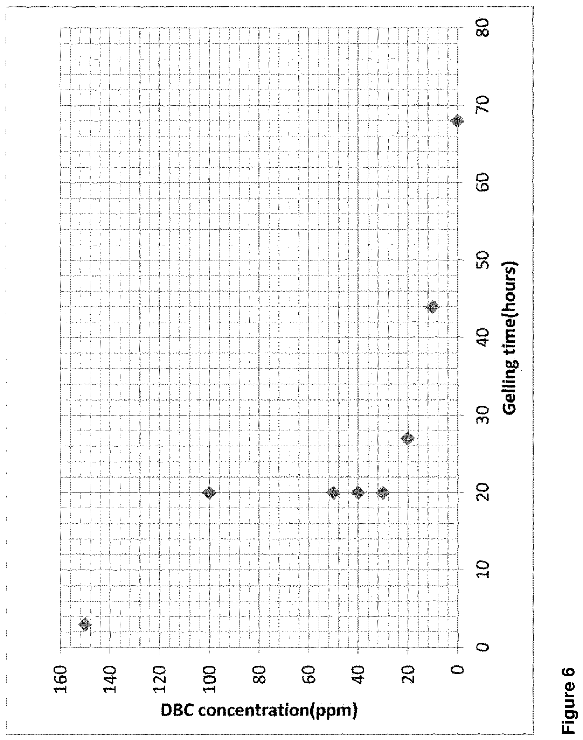

Figure 6 is a graph referred to in Example 7 showing the variation of gelling time (i.e. the time from commencement of polymerisation to reaching gel point) with concentration of dibutyltin dichloride thermal polymerisation catalyst maintained at 40°C for the general composition of Example 3.

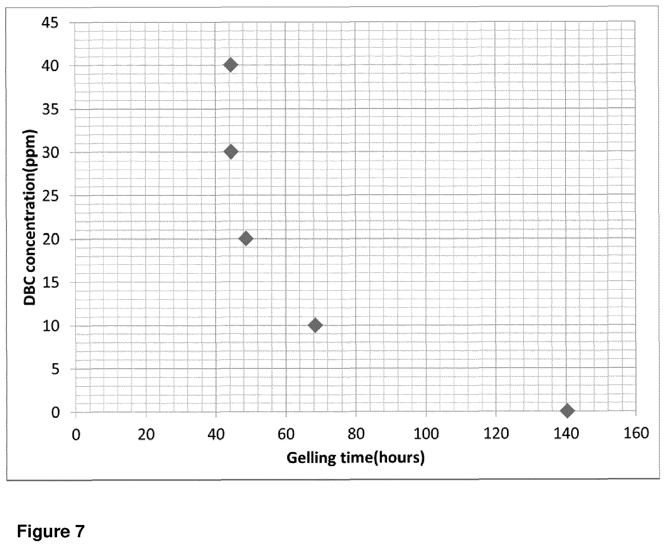

Figure 7 is a graph referred to in Example 8 showing the variation of gelling time (i.e. the time from commencement of polymerisation to reaching gel point) with concentration of dibutyltin dichloride thermal polymerisation catalyst for the composition of Example 3 when cured to gelling at a temperature of 30°C.

Embodiments of the invention will be described with reference to Figures 1, 2 and 3.

Figure 1 shows a mould (100(a)) formed of stainless steel and including a cylindrical side wall (110) extending upward from a closed base (120) to an open top end (130) for receiving reactive monomer composition. The length of the mould may provide an aspect ratio of at least 3 such as at least 5. The diameter of the mould (A-A') may be at least 50 mm, at least 60 mm or at least 70 mm. Typically the diameter will be no more than 150 mm such as no more than 100 mm. The base lower end (140) of the side wall includes an openable closure (150) comprising an annular recess (155) receiving a washer (156) engaging the side wall to resist the egress of reactive monomer composition. The lower end of the side wall is seated on a portion (156) of the base which extends below the side wall (110).

Figures 2 and 3 show moulds (100(b) and 100(c)) formed of stainless steel and include a side wall (110) extending upward from a closed base (120) to an open top end (130) for receiving reactive monomer composition. The maximum thickness of the cross section (A-A') is generally at least 50 mm such as at least 70 mm and will generally be no more than 150 mm such as no more than 100 mm. The minimum thickness (orthogonal to the centre point of the section A-A') is generally at least 30 mm such as at least 40 mm and will generally be no more than 100 mm such as no more than 80 mm. The lower end (140) of the side wall includes a openable closure (150) formed by a base mounting (160) extending about the bottom end (140) of the side wall (110) and a base plate (170) forming a closure for the bottom end (150) with a seal or washer (180) providing a seal against egress of the monomer reactive composition when the base (120) is closed. The base mounting (160) and base plate (170) may be held together with a seal (180) therebetween by fasteners (190) urging the base mounting and base to seal with the washer therebetween.

In the process for preparing the plastic rod the moulds (100(a), 100(b), 100(c)) are closed at the lower end of the side wall (110) and the internal surfaces (200) of the mould are contacted with a non-stick agent such as a fatty-alkyltrichlorosilane as a dilute solution of in a solvent such as a petroleum distillate. The non-stick solution may be rinsed with a volatile solvent such as acetone and the internal surfaces allowed to dry.

The liquid reactive monomer composition is introduced to the mould (100 (a), (b) or (c)) at the top end (130) in an amount to achieve the required rod length (preferably an aspect ratio of be at least 2 and preferably at least 3. Rods of significant length may be prepared in accordance with the invention having an aspect ratio of up to 50 such as up to 20 by varying the length of the mould side wall (110) and amount of reactive monomer composition.

Following introduction of the reactive monomer composition the top end of the mould may be closed with a temporary closure to exclude dust or other material entering the mould. Mixing of the isocyanate and active hydrogen compound in the mould or prior to introduction of the mould is the initiation of polymerisation. Additionally heat may be applied to provide curing as described above. The monomer composition, temperature and catalyst may be chosen to provide a time to gel point of at least 50 hours, preferably at least 60 hours, more preferably at least 70 hours, still more preferably at least 80 hours and most preferably at least 100 hours following initiation of polymerisation. After reaching the gel point the temperature is generally gradually increased to increasing to in the range of 80°C to 160°C, preferably 120°C to 140°C is preferably maintained for a period of at least 30 minutes and more preferably at least 60 minutes. The mould and polymerised reactive monomer are then cooled and the plastic rod removed from the mould. The rod may be subject to a post curing heating step at a temperature in the range of 80°C to 160°C, preferably 120°C to 140°C. The rod is then cut transversely to provide portion for forming spectacle lenses or spectacle lens blanks which may be finished or semifinished using processes known in the art such as grinding, polishing and coating with any of a variety of coatings known in the art for colouring, providing photochromism, toughening against damage or providing optical effects. The portions may be cut from the rod so as to provide planar or curved faces which may then be subject to the processes used to provide finished or semifinished lenses.

Generally speaking the cutting of lens forming portions from the rod allows significant savings with regard to wastage of plastics material. Lenses individually cast by traditional methods are generally much larger than the fitted size required by the wearer of the spectacles leading to significant wastage. The process of the invention allows rods to be formed in a range of cross section shapes and dimensions minimising wastage. Lens portions can also be prepared to more closely match the wearers specifications. This aspect of the invention also allows the transport and storage of rods rather than individual lens blanks which avoids the need to pack and protect the individual lenses so as to prevent damage to optical surfaces.

The invention will now be described with reference to the following examples. It is to be understood that the examples are provided by way of illustration of the invention and that they are in no way limiting to the scope of the invention.

### EXAMPLES

### Example 1

### Part (a) - Mould preparation

A stainless steel tube (round cross-section) with a cap and o-ring seal at the bottom was used having an internal diameter of 70mm and 270 mm length.

An octadecyl trichlorosilane solution (1% in X55 distillate) was poured into the metal tube to cover the internal tube surface for 1 minute, then the solution was poured out. The tube was left standing for 20 minutes then cleaned with acetone and tissue or cloth for both inside and outside of the tube. The tube was dried and cleaned with compressed air.

### Part (b) - Monomer mix preparation

A reactive monomer composition (dibutyltin dichloride) was prepared having the composition shown in Table 1.

**Table 1**

| **Component** | **Parts by weight** |
|---|---|
| DBC | 0.0050 |
| Kayaset Blue Dye (0.1 % in 9G) | 0.0112 |
| Kayaset Violet Dye (0.1 % in 9G) | 0.0165 |
| Tinuvin 329 (benzotriazole UV absorber) | 0.2500 |
| NBDI - norbornane diisocyanate | 50.1271 |
| *Stir to dissolve for 30 minutes* | |
| GST polythiol | 23.6449 |
| PTMP polythiol | 25.3000 |
| Total | 99.3547 |

| | |
|---|---|
| *DBC - dibutyltin dichloride catalyst* *NBDI -di(isocyanatomethyl)norbornane commonly referred to as norbornane diisocyanate* *Tinuvin 329) - benzotriazole UV absorber* *GST - 1,2-bis(2'-mercaptoethylthio)-3mercaptopropane* *PTMP - pentaerythritol-tetrakis(3-mercaptopropionate)* *9G is a carrier for the dyes, it is NK ester 9G polyethylene glycol 400 dimethacrylate* | |

The reactive monomer composition was firstly filtered with 4.5 micron filter then stirred and degassed for 1 hour at 100 Pascal vacuum.

### Part (c) - Filling the mould

The reactive monomer composition was poured into the metal tube prepared in Part (a). The top of the metal tube was covered tightly with aluminium foil to prevent dust from getting in.

### Step (d) - Curing of the reactive monomer composition

The metal tube filled with reactive monomer composition was placed vertically in an oven. The oven is programmed with curing cycle shown in Table 2.

**Table 2**

| **Curing steps** | |
|---|---|
| Start | Starting temperature at 40°C |
| Step 1 | Hold the oven temperature at 40°C for 120 hours |
| Step 2 | Heat up from 40°C to 130°C evenly and gradually within 40 hours |
| Step 3 | Hold at 130°C for 2 hours |
| Step 4 | Cool down from 130°C to 20°C within 3 hours |

### Part (e) - Removing the plastic rod from the metal tube

Since the metal tube was treated with non-stick material, and the monomer shrunk during the polymerisation, after removing the metal cap and bouncing the metal tube against a rubber surface, the polymer rod can be pushed out from the metal tube.

### Part (f) - Post curing process

The plastic rod was placed in an oven to go through post curing steps shown in Table 3.

**Table 3 - Post curing steps**

| **Curing steps** | |
|---|---|
| Start | Starting temperature at 30°C |
| Step 1 | Heat up from 30°C to 130°C gradually within 1 hour |
| Step 2 | Hold at 130°C for 3 hours |
| Step 3 | Cool down from 130°C to 30°C within 1 hour |

### Part (g) - Cutting and surfacing of a lens from the plastic rod

A saw was used to cut a slice of plastic from the plastic rod. This slice of plastic was blocked on one side first and surfaced with freeform cutting and polishing machine on one side. Then the plastic was blocked on the polished side and cut and polished on another side with the freeform machine. The resulted lens was checked under polariscope and Bulbtronics light and shown to be uniform. There was an insignificant level of "strain" in the lens.

### Example 2 - Oval and elliptical moulds

In Example 2, the only difference from Example 1 is that the shape of the mould is different. The moulds used in Example 2 included an oval cross-section mould shown in Figure 1 a and an elliptical cross-section mould shown in Figure 1 b. Oval shaped and elliptical cross-section rods can save a lot of monomers to reduce wastage in both materials and cutting time.

### Example 3

The composition of Example 3 was prepared by mixing the components in the parts by weight shown in Table 4. The composition was cured in a mould prepared according to Example 1 Part (a) and the mould filled in accordance with Example 1 Part (c). The curing process was as referred to in Example 1 Part (d) except that the step 2 of the curing cycle was conducted over 7.6 days. The processing steps of Example 1 Part (e), (f) and (g) were repeated and the lens was found to be uniform. There was insignificant "strain" in the lenses.

**Table 4**

| **Component** | **Parts w/w** |
|---|---|
| DBC (Catalyst) | 0 |
| Kayaset Blue Dye (0.1 % in 9G) | 0.02 |
| Kayaset Violet Dye (0.1 % in 9G) | 0.028 |
| Tinuvin 329 | 1.0 |
| GST polythiol | 51.40 |
| *Stir to dissolve for 30 minutes* | |
| XDI - isocyanate | 47.45 |
| Total | 99.90 |
| *Stir and degas (100 pascal) in the fish bowl* | |

| | |
|---|---|
| *XDI - xylene diisocyanate* | |

### Example 4 - Gelling time

A range of reactive monomer composition samples in accordance with the composition of Example 1 (Table1) were prepared with various catalyst (DBC) concentrations as shown in Table 5. Each sample was a 20 grams sample and was placed in a 25 ml glass vial with lid on.

The glass vials with the samples were placed in an oven with constant temperature at 40°C. The vials were inspected during working hours and their status was recorded in the following table 5. In this experiment, the catalyst (DBC) concentrations were in 0ppm, 25ppm, 50ppm, 100ppm, 150ppm, 200ppm and 250ppm. In Table 5 "L" indicates a liquid sample, "V" indicates a viscous liquid sample, "V V" indicates a very viscous liquid sample. If the sample did not move any more when we shook the glass vial, we marked it as "S" which indicates a solid.

The results are shown in Table 5.

**Table 5 - Part (a)**

| **DBC conc.** | **Time (hours)** | **0** | **3** | **20** | **24** | **27** | **44** | **48** | **51** |
|---|---|---|---|---|---|---|---|---|---|
| 0 ppm | | L | L | L | L | L | L | L | L |
| 25 ppm | | L | L | L | L | L | L | L | L |
| 50 ppm | | L | L | L | L | L | V | V | V |
| 100 ppm | | L | L | L | V | V | V V | V V | V V |
| 150 ppm | | L | L | V | V V | V V | S | S | S |
| 200 ppm | | L | L | V V | V V | S | S | S | S |
| 250 ppm | | L | L | S | S | S | S | S | S |

**Table 5 - part (b)**

| **DBC conc.** | **Time (hours)** | **68** | **99** | **164** | **171** | **188** | **476** | **596** | **620** |
|---|---|---|---|---|---|---|---|---|---|
| 0 ppm | | L | L | L | L | L | V | V V | S |
| 25 ppm | | L | V | V V | V V | S | S | S | S |
| 50 ppm | | V | V V | S | S | S | S | S | S |
| 100 ppm | | S | S | S | S | S | S | S | S |
| 150 ppm | | S | S | S | S | S | S | S | S |
| 200 ppm | | S | S | S | S | S | S | S | S |
| 250 ppm | | S | S | S | S | S | S | S | S |

From the above Table 5, it can be seen that the monomer mix can turn into solid very quickly if the DBC concentration is 250ppm. If the DBC concentration is 100 ppm, the monomer mix will turn into solid in 3 days at 40°C. If the DBC concentration is 25 ppm, the monomer composition becomes solid after 7 days. The DBC concentration played an important role in controlling the reaction rate and monomer mix gelling time. Monomer mix with Lower DBC concentration took longer to gel.

**Table 6 - relationship between gelling time and DBC concentration for Example 1 composition at 40°C.**

| **DBC concentration (ppm)** | **Gelling time (hours)** |
|---|---|
| 0 | 620 |
| 25 | 188 |
| 50 | 164 |
| 100 | 68 |
| 150 | 44 |
| 200 | 27 |
| 250 | 20 |

The relationship between DBC concentration and gelling time for this composition at 40°C is shown in the graph in Figure 4.

### Example 5

This Example examines the way in which the curing conditions and catalyst amount affect the time to gelation.

The procedure of Example 5 was repeated using an oven temperature of 30°C rather than 40°C. The results are shown in Table 7.

**Table 7 - part (a)**

| **DBC conc.** | **Time (hours)** | **0** | **16** | **20** | **24** | **40** | **44** | **48** | **64** |
|---|---|---|---|---|---|---|---|---|---|
| 50 ppm | | L | L | L | L | L | L | L | L |
| 100ppm | | L | L | L | L | L | L | L | L |
| 150ppm | | L | L | L | L | L | V | V | VV |
| 200ppm | | L | L | V | V | V | VV | VV | VV |
| 250ppm | | L | L | V | V | VV | VV | VV | S |

**Table 7 - part (b)**

| **DBC conc.** | **Time (hours)** | **68** | **72** | **88** | **96** | **160** | **188** | **264** | **328** |
|---|---|---|---|---|---|---|---|---|---|
| 50 ppm | | L | L | L | L | V V | V V | V V | S |
| 100ppm | | V | V | V V | V V | S | S | S | S |
| 150ppm | | V V | V V | S | S | S | S | S | S |
| 200ppm | | V V | S | S | S | S | S | S | S |
| 250ppm | | S | S | S | S | S | S | S | S |

The gelation time for each amount of DBC catalyst are shown in Table 8.

**Table 8**

| **DBC concentration (ppm)** | **Gelling time (hours)** |
|---|---|
| 50 | 328 |
| 100 | 160 |
| 150 | 88 |
| 200 | 71.75 |
| 250 | 64 |

The relationship between DBC concentration and gelling time for this composition at 30°C is shown in the graph in Figure 5.

### Example 6

On the information from the results reported in Example 6 a tube casting in the stainless steel tube referred to in Example 1 -Part (a) was conducted as follows.

The DBC concentration was selected as 100 ppm. The curing cycle was selected to hold at 30°C for 160 hours before ramping up the temperature. The composition of a total of 1.9 Kg had the composition shown below in Table 9.

**Table 9**

| **Component** | **Content** (parts by weight) |
|---|---|
| **8.4 days cure** | |
| DBC (Catalyst) solid | 0.0100 |
| Kayaset Blue Dye (0.1 % in 9G) | 0.0112 |
| Kayaset Violet Dye (0.1 % in 9G) | 0.0165 |
| Tinuvin 329 | 0.2500 |
| NBDI | 50.1271 |
| Stir to dissolve for 30 minutes | |
| GST | 23.6449 |
| PTMP | 25.3000 |
| total | 99.3597 |
| | |
| Filter with 4.5 micron disc+glass fibre filter | |
| Stir and degas for 1 hour at 100 pascal | 1 cylindrical tube |
| in fish bowl | fresh silane treatment |

The curing cycle shown in Table 10 was used followed by the post curing steps in Table 11.

**Table 10**

| **Curing steps** | |
|---|---|
| Start | Starting temperature at 30°C |
| Step1 | Hold the oven temperature at 30°C for 160 hours |
| Step 2 | Heat up from 30°C to 130°C evenly and gradually within 40 hours |
| Step 3 | Hold at 130°C for 2hours |
| Step 4 | Cool down from 130°C to 20°C within 3 hour |

**Table 11**

| **Post curing** | **Temperature** |
|---|---|
| 0 | 30 |
| 1 | 130 |
| 3 | 130 |
| 1 | 30 |

The lens cut from this rod is quite uniform. The "strain" level was low.

### Example 7

The testing of Example 5 was carried out using the composition of Example 3 at 40°C and 30°C. Table 12 summarized the result at 40°C. The reactivity of the reactive monomer composition of Example 3 is higher than that of Example 1. With 0ppm DBC, the monomer mix was gelled after 3 days. The samples with 30ppm, 40ppm, 50ppm, 100ppm of DBC all gelled after 1 day at 40°C. The sample with 150ppm DBC gelled after 3 hours at 40°C.

The results from the gelation study for the composition of Example 3 with variation in catalyst.

**Table 12**

| **Gelling time** | **DBC concentration** |
|---|---|
| 68 | 0 |
| 44 | 10 |
| 27 | 20 |
| 20 | 30 |
| 20 | 40 |
| 20 | 50 |
| 20 | 100 |
| 3 | 150 |

A graph showing the relationship between gelling time and DBC concentration for this composition at 40°C is in Figure 6.

### Example 8

At 30°C, the monomer mix's reactivity was lower than the ones at 40°C. For the monomer mix with 0 ppm DBC, it turned into solid at 30°C after 140.5 hours. The gelling time results are shown in Table 13 and a graph showing the relationship is Figure 7.

**Table 13**

| **DBC concentration** | **Gelling time(hours)** |
|---|---|
| 0 | 140.5 |
| 10 | 68.5 |
| 20 | 48.75 |
| 30 | 44.5 |
| 40 | 44.5 |

The relationship between DBC concentration and gelling time for this composition at 30°C is shown in the graph in Figure 7.

### Comparative Example 1 - An example without silane treatment

The process of Example 1 was repeated with the exception that the metal tube was not treated with octadecyl trichlorosilane solution. After curing, it was very difficult to get the plastic rod from the metal tube due to the strong adhesion between the metal tube and the plastic rod.

### Comparative Example 2 - An example with acrylate reactive monomer composition

An acrylate reactive monomer composition (1 Kg) in accordance with the composition of Table 14 was used to case a plastic rod.

**Table 14**

| **Component** | **Parts by weight** |
|---|---|
| Terpinolene | **0.5** |
| Tinuvin 765 (hindered amine light stabilizer) | **0.05** |
| NK Oligo U4HA- polyfunctional urethane acrylate | 5 |
| BP2EMA | 50 |
| NK ester 9G - Polyethylene Glycol 400 Dimethacrylate | **45** |
| TBPEH - Tert-Butyl peroxy-2-ethylhexanoate | **1.4** |
| total | 101.95 |
| Mix 30 minutes | |
| disc filter 4.5 micron | |
| Degas 30 minutes in vacuum oven, 8000 pascal | |

| | |
|---|---|
| *NK Oligo U-4HA: urethane monomer having 4 terminal acrylic or methacrylic groups by Shin Nakamura Chemical* *BP2EMA: bisphenol A ethoxylated di methacrylate* | |

The dimension of the PVC pipe is 70 mm in internal diameter, 75mm in external diameter. The length of the pipe was 520 mm. There were lids on both ends of the PVC pipe. The pipe was filed with nitrogen gas after filling of monomer mix.

The methacrylate monomer composition based on the above formulation was prepared and cast in a PVC tube using the curing cycle below. This composition corresponds to a commercial lens material.

**Table 15**

| | **Curing** | | |
|---|---|---|---|
| | **time** | **Temperature** | **Description** |
| Start | 0 | 51 | Start at 51°C |
| Step 1 | 20 | 51 | Hold at 51°C for 20 hours |
| Step 2 | 40 | 90 | Heat up from 51 °C to 90°C within 20 hours |
| Step 3 | 45 | 90 | Hold at 90°C for 5 hours |
| Step 4 | 45.5 | 30 | Cool down from 90°C to 30°C within 0.5 hour |
| Step 5 | 46 | 30 | Hold at 30°C for 0.5 hour |

The lens from this rod was full of "strain".

### Another acrylate system

A methacrylate reactive monomer system was prepared in an amount of 2Kg in accordance with the composition shown in Table 16.

**Table 16**

| **Component** | **Parts by weight** |
|---|---|
| Terpinolene | 0.5 |
| Tinuvin 765 | 0.05 |
| U4HA (TS2) | 5 |
| BP2EMA | 50 |
| NK ester 9G | 45 |
| New TBPEH | 1.4 |
| total | 101.95 |
| mix 30 minutes | |
| Mix 30 minutes | |
| no filtering | |
| | |
| Degas 30 minutes in vacuum oven, 8000 pascal | |

2 kg monomer mix was prepared, and was cast in a PVC tube using the curing cycle shown in Table 17. This curing cycle was different from previous curing cycle.

The dimension of the PVC pipe is 70 mm in internal diameter, 75mm in external diameter. The length of the pipe was 52 cm. There were lids on both ends of the PVC pipe. The pipe was filed with nitrogen gas after filling of monomer mix.

**Table 17**

| | **Curing** | | |
|---|---|---|---|
| | **time** | **temperature** | **description** |
| Start | 0 | 51 | Start at 51°C |
| Step 1 | 20 | 51 | Hold at 51°C for 20 hours |
| Step 2 | 64 | 90 | Heat up from 51 to 90°C within 44 hours |
| Step 3 | 69 | 90 | Hold at 90°C for 5 hours |
| Step 4 | 69.5 | 30 | Cool down from 90 to 30°C within 0.5 hour |
| Step 5 | 70 | 30 | Hold at 30°C for 0.5 hour |

The lens from this rod also contained a lot of "strain".

### Example 9

This example examines the variation of the occurrence or strain with time to gelation and the correlation with catalyst content. The performance or different monomers will change the effect of the catalyst and amount of catalyst, which is optimal to provide gelation without striation.

Table 18 illustrates the influence of factors including reactive monomer type, volume, mould dimensions, catalyst amount and temperature on the gelling time of the composition.

**Table 18**

| **Monomer Quantity (kg)** | **Tube Dimensions (mm)** | **DBC (ppm)** | **Curing** | **Colour** | **Strain** |
|---|---|---|---|---|---|
| 1.0 | 60 x 250 | 270 | 30°C | Good | Poor |
| | | | 2 days | | |
| 1.5 | 70 x 270 | 270 | 30°C | Good | Poor |
| | | | 2 days | | |
| 1.5 | 70 x 250 | 150 | 40°C | Good | Poor |
| | | | 3 days | | |
| 1.5 | 70 x 270 | 100 | 40°C | Good | Fair |
| | | | 4 days | | |
| 1.5 | 70 x 270 | 50 | 40°C | Good | Good |
| | | | 120 hours | | |
| 1.2 | Oval 200mm long | 50 | 40°C | Good | Good |
| | | | 120 hours | | |

## Claims

1. A process for preparing spectacle lenses or spectacle lens blanks comprising: curing a reactive monomer composition in an elongated mould (100a, 100b, 100c) to form a plastic rod and transversely cutting portions therefrom for forming the spectacle lenses or the spectacle lens blanks, wherein,
i) the cross-section of the plastic rod is round, the diameter of the cross section is at least 40 mm and no more than 150 mm, or
ii) the shape of the cross section of the plastic rod is irregular, the maximum width is at least 40 mm, the minimum width is at least 30 mm and the maximum cross-section is no more than 150 mm.

2. The process according to claim 1 wherein the plastic rod is formed of a urethane resin and the reactive monomer composition comprises at least one isocyanate and/or isothiocyanate compound and at least one active hydrogen compound comprising a plurality of active hydrogen groups selected from the group consisting of hydroxyl (-OH), mercapto (-SH) and combinations thereof.

3. The process according to any one of the previous claims, wherein the reactive monomer composition comprises an isocyanate and a polythiol compound.

4. The process according to any one of the previous claims, wherein the reactive monomer composition is polymerised to reach the gel point at a temperature which is no more than 50 °C, preferably no more than 40 °C, further preferably no more than 30 °C prior to reaching the gel point.

5. The process according to any one of the previous claims, wherein the reactive monomer composition is polymerised so as to provide a time to reach the gel point of at least 50 hours, preferably at least 60 hours, more preferably at least 70 hours, further preferably at least 90 hours and most preferably at least 100 hours following initiation of polymerisation.

6. A process according to any one of the previous claims, wherein the reactive monomer composition is polymerised so as to provide a time to reach the gel point of at least 50 hours at a temperature which is no more than 50 °C, preferably a time to reach the gel point of at least 60 hours at a temperature which is no more than 50 °C, more preferably a time to reach the gel point of at least 70 hours at a temperature which is no more than 45 °C, further preferably a time to reach the gel point of at least 90 hours at a temperature which is no more than 45 °C and most preferably a time to reach the gel point of at least 100 hours at a temperature which is no more than 40 °C.

7. The process according to any one of the previous claims, wherein the reactive monomer composition comprises no more than 100 ppm of dialkyltin dichloride catalyst, preferably from 1 ppm to 100 ppm, more preferably from 1 ppm to 80 ppm and most preferably from 5 ppm to 80 ppm dialkyltindichloride catalystbased on the weight of the reactive monomer composition.

8. The process according to any one of the previous claims, wherein the mould (100a, 100b, 100c) has internal surfaces (200), which have been contacted with a non-stick material.

9. The process according to any one of the previous claims wherein the non-stick material is an alkyltrihalosilane, preferably a fatty-alkyltrichlorosilane, more preferably a C₂₂ to C₂₂ alkyltrichlorosilane and most preferably octadecyltrichlorosilane.

10. The process according to any one of the previous claims wherein the mould (100a, 100b, 100c) is formed of a metal, glass or plastics material.

11. The process according to any one of the previous claims wherein the rod has an aspect ratio of at least 2, preferably at least 3, more preferably from 3 to 50 and still more preferably from 3 to 20.

12. The process according to any one of the previous claims, wherein:
(a) the reactive polymer composition comprises:
(i) a polythiol monomer;
(ii) an isocyanate selected from the group consisting of xylenediisocyanate, di(isocyanatomethyl)norbornane and dicyclohexylmethane diisocyanate; wherein the molar ratio of NCO/(OH + SH) is in the range of from 0.5 to 3.0; and
(iii) from 1 ppm to 100 ppm based on the reactive polymer composition of dialkyltin dichloride catalyst;
(b) the temperature is maintained to the gelation point at a temperature of 0°C to 50°C; and
(c) the time to reach the gelation point is at least 70 hours more preferably at least 90 hours and still more preferably at least 100 hours.

13. The process according to claim 1 wherein mould (100a, 100b, 100c) is formed of plastic and the process of transversely cutting portion from the rod comprises cutting through the mould (100a, 100b, 100c) while the rod is located in the mould (100a, 100b, 100c).

## Patentansprüche

1. Verfahren zum Herstellen von Brillengläsern oder Brillenglasrohlingen, umfassend:
Härten einer reaktionsfähigen Monomerzusammensetzung in einem langgestreckten Formwerkzeug (100a, 100b, 100c), um einen Kunststoffstab zu bilden, und
querlaufendes Abschneiden von Teilen davon, um die Brillengläser oder Brillenglasrohlinge zu bilden, wobei
i) der Querschnitt des Kunststoffstabs rund ist, der Durchmesser des Querschnitts wenigstens 40 mm und nicht mehr als 150 mm beträgt oder
ii) die Querschnittsform des Kunststoffstabs unregelmäßig ist, die größte Breite wenigstens 40 mm beträgt, die kleinste Breite wenigstens 30 mm beträgt und der größte Querschnitt nicht mehr als 150 mm beträgt.

2. Verfahren gemäß Anspruch 1, wobei der Kunststoffstab aus einem Urethanharz hergestellt wird und die reaktionsfähige Monomerzusammensetzung wenigstens eine Isocyanat- und/oder Isothiocyanatverbindung und wenigstens eine aktive Wasserstoffverbindung umfasst, die eine Vielzahl von aktiven Wasserstoffgruppen ausgewählt aus der Gruppe bestehend aus Hydroxy (-OH), Mercapto (-SH) und Kombinationen davon umfasst.

3. Verfahren gemäß einem der vorstehenden Ansprüche, wobei die reaktionsfähige Monomerzusammensetzung eine Isocyanat- und eine Polythiolverbindung umfasst.

4. Verfahren gemäß einem der vorstehenden Ansprüche, wobei die reaktionsfähige Monomerzusammensetzung so polymerisiert wird, dass der Gelpunkt bei einer Temperatur erreicht wird, die vor dem Erreichen des Gelpunkts nicht mehr als 50 °C, vorzugsweise nicht mehr als 40 °C, bevorzugter nicht mehr als 30 °C beträgt.

5. Verfahren gemäß einem der vorstehenden Ansprüche, wobei die reaktionsfähige Monomerzusammensetzung so polymerisiert wird, dass eine Zeit bis zum Erreichen des Gelpunkts von wenigstens 50 Stunden, vorzugsweise wenigstens 60 Stunden, bevorzugter wenigstens 70 Stunden, noch bevorzugter wenigstens 90 Sunden und höchst bevorzugt wenigstens 100 Stunden nach dem Auslösen der Polymerisation erhalten wird.

6. Verfahren gemäß einem der vorstehenden Ansprüche, wobei die reaktionsfähige Monomerzusammensetzung so polymerisiert wird, dass eine Zeit bis zum Erreichen des Gelpunkts von wenigstens 50 Stunden bei einer Temperatur, die nicht mehr als 50 °C beträgt, erhalten wird, vorzugsweise eine Zeit zum Erreichen des Gelpunkts von wenigstens 60 Stunden bei einer Temperatur, die nicht mehr als 50 °C beträgt, bevorzugter eine Zeit zum Erreichen des Gelpunkts von wenigstens 70 Stunden bei einer Temperatur, die nicht mehr als 45 °C beträgt, noch bevorzugter eine Zeit zum Erreichen des Gelpunkts von wenigstens 90 Stunden bei einer Temperatur, die nicht mehr als 45 °C beträgt, und höchst bevorzugt eine Zeit zum Erreichen des Gelpunkts von wenigstens 100 Stunden bei einer Temperatur, die nicht mehr als 40 °C beträgt.

7. Verfahren gemäß einem der vorstehenden Ansprüche, wobei die reaktionsfähige Monomerzusammensetzung nicht mehr als 100 ppm Dialkylzinndichlorid-Katalysator umfasst, vorzugsweise von 1 ppm bis 100 ppm, bevorzugter von 1 ppm bis 80 ppm und höchst bevorzugt von 5 ppm bis 80 ppm Dialkylzinndichlorid-Katalysator bezogen auf das Gewicht der reaktionsfähigen Monomerzusammensetzung.

8. Verfahren gemäß einem der vorstehenden Ansprüche, wobei das Formwerkzeug (100a, 100b, 100c) Innenoberflächen (200) aufweist, die mit einem Antihaftmaterial in Kontakt gebracht worden sind.

9. Verfahren gemäß einem der vorstehenden Ansprüche, wobei das Antihaftmaterial ein Alkyltrihalogensilan ist, vorzugsweise ein Fettalkyltrichlorsilan, bevorzugter ein C₂₂- bis C₂₂-Alkyltrichlorsilan und höchst bevorzugt Octadecyltrichlorsilan.

10. Verfahren gemäß einem der vorstehenden Ansprüche, wobei das Formwerkzeug (100a, 100b, 100c) aus einem Metall-, Glas- oder Kunststoffmaterial besteht.

11. Verfahren gemäß einem der vorstehenden Ansprüche, wobei der Stab ein Aspektverhältnis von wenigstens 2 aufweist, vorzugsweise wenigstens 3, bevorzugter von 3 bis 50 und noch bevorzugter von 3 bis 20.

12. Verfahren gemäß einem der vorstehenden Ansprüche, wobei:
(a) die reaktionsfähige Polymerzusammensetzung umfasst:
(i) ein Polythiolmonomer;
(ii) ein Isocyanat ausgewählt aus der Gruppe bestehend aus Xylendiisocyanat, Di(isocyanatomethyl)norbornan und Dicyclohexylmethandiisocyanat; wobei das Molverhältnis von NCO/(OH + SH) in dem Bereich von 0,5 bis 3,0 liegt; und
(iii) von 1 ppm bis 100 ppm Dialkylzinndichlorid-Katalysator bezogen auf die reaktionsfähige Polymerzusammensetzung;
(b) die Temperatur bis zu dem Gelierpunkt bei einer Temperatur von 0 °C bis 50 °C gehalten wird; und
(c) die Zeit zum Erreichen des Gelierpunkts wenigstens 70 Stunden beträgt, bevorzugter wenigstens 90 Stunden und noch bevorzugter wenigstens 100 Stunden.

13. Verfahren gemäß Anspruch 1, wobei das Formwerkzeug (100a, 100b, 100c) aus Kunststoff besteht und das Verfahren des querlaufenden Abschneidens eines Teils von dem Stab Schneiden durch das das Formwerkzeug (100a, 100b, 100c) umfasst, während der Stab in dem Formwerkzeug (100a, 100b, 100c) angeordnet ist.

## Revendications

1. Procédé de préparation de verres de lunettes ou d'ébauches de verres de lunettes comprenant :
le durcissement d'une composition de monomères réactifs dans un moule allongé (100a, 100b, 100c) pour former une tige en plastique et la découpe transversale de parties de celle-ci pour former les verres de lunettes ou les ébauches de verres de lunettes, dans lequel
i) la section transversale de la tige en plastique est ronde, le diamètre de la section transversale fait au moins 40 mm et pas plus de 150 mm, ou
ii) la forme de la section transversale de la tige en plastique est irrégulière, la largeur maximale fait au moins 40 mm, la largeur minimale fait au moins 30 mm et la section transversale maximale ne fait pas plus de 150 mm.

2. Procédé selon la revendication 1, dans lequel la tige en plastique est constituée d'une résine d'uréthane et la composition de monomères réactifs comprend au moins un composé isocyanate et/ou isothiocyanate et au moins un composé à hydrogène actif comprenant une pluralité de groupes hydrogène actifs choisis dans le groupe constitué par le groupe hydroxyle (-OH), le groupe mercapto (-SH) et les combinaisons de ceux-ci.

3. Procédé selon l'une quelconque des revendications précédentes, dans lequel la composition de monomères réactifs comprend un isocyanate et un composé polythiol.

4. Procédé selon l'une quelconque des revendications précédentes, dans lequel la composition de monomères réactifs est polymérisée pour atteindre le point de gélification à une température qui ne fait pas plus de 50 °C, de préférence pas plus de 40 °C, mieux encore pas plus de 30 °C avant d'atteindre le point de gélification.

5. Procédé selon l'une quelconque des revendications précédentes, dans lequel la composition de monomères réactifs est polymérisée de manière à laisser un temps pour atteindre le point de gélification d'au moins 50 heures, de préférence au moins 60 heures, mieux au moins 70 heures, mieux encore au moins 90 heures et idéalement au moins 100 heures après l'initialisation de la polymérisation.

6. Procédé selon l'une quelconque des revendications précédentes, dans lequel la composition de monomères réactifs est polymérisée de manière à laisser un temps pour atteindre le point de gélification d'au moins 50 heures à une température qui ne fait pas plus de 50 °C, de préférence un temps pour atteindre le point de gélification d'au moins 60 heures à une température qui ne fait pas plus de 50 °C, mieux un temps pour atteindre le point de gélification d'au moins 70 heures à une température qui ne fait pas plus de 45 °C, mieux encore un temps pour atteindre le point de gélification d'au moins 90 heures à une température qui ne fait pas plus de 45 °C et idéalement un temps pour atteindre le point de gélification d'au moins 100 heures à une température qui ne fait pas plus de 40 °C.

7. Procédé selon l'une quelconque des revendications précédentes, dans lequel la composition de monomères réactifs ne comprend pas plus de 100 ppm de catalyseur au dichlorure de dialkylétain, de préférence de 1 ppm à 100 ppm, mieux de 1 ppm à 80 ppm et idéalement de 5 ppm à 80 ppm de catalyseur au dichlorure de dialkylétain, rapporté au poids de la composition de monomères réactifs.

8. Procédé selon l'une quelconque des revendications précédentes, dans lequel le moule (100a, 100b, 100c) a des surfaces internes (200), qui ont été mises en contact avec un matériau non collant.

9. Procédé selon l'une quelconque des revendications précédentes, dans lequel le matériau non collant est un alkyltrihalogénosilane, de préférence un (alkyl gras)trichlorosilane, mieux encore un (alkyl en C₂₂ à C₂₂)trichlorosilane et idéalement l'octadécyltrichlorosilane.

10. Procédé selon l'une quelconque des revendications précédentes, dans lequel le moule (100a, 100b, 100c) est constitué d'un matériau métallique, vitreux ou plastique.

11. Procédé selon l'une quelconque des revendications précédentes, dans lequel la tige a un rapport de forme d'au moins 2, de préférence au moins 3, mieux de 3 à 50 et mieux encore de 3 à 20.

12. Procédé selon l'une quelconque des revendications précédentes, dans lequel :
(a) la composition de monomères réactifs comprend :
(i) un monomère de polythiol ;
(ii) un isocyanate choisi dans le groupe constitué par le diisocyanate de xylène, le di(isocyanatométhyl)-norbornane et le diisocyanate de dicyclohexylméthane ; dans lequel le rapport molaire NCO/(OH+SH) se situe dans la gamme de 0,5 à 3,0 ; et
(iii) de 1 ppm à 100 ppm, rapporté à la composition de polymères réactifs, de catalyseur au dichlorure de dialkylétain ;
(b) la température est maintenue jusqu'au point de gélification à une température de 0 °C à 50 °C ; et
(c) le temps pour atteindre le point de gélification est d'au moins 70 heures, mieux au moins 90 heures et mieux encore au moins 100 heures.

13. Procédé selon la revendication 1, dans lequel le moule (100a, 100b, 100c) est constitué de plastique et le procédé de découpe transversale d'une partie de la tige comprend une découpe à travers le moule (100a, 100b, 100c) pendant que la tige est située dans le moule (100a, 100b, 100c).
